Europäisches Patentamt

European Patent Office

Office européen des brevets

(11) Veröffentlichungsnummer: **0 197 260**
**A1**

(12) ## EUROPÄISCHE PATENTANMELDUNG

(21) Anmeldenummer: 86101636.8

(22) Anmeldetag: 08.02.86

(51) Int. Cl.⁴: **C 08 G 18/40**
C 08 G 18/62, C 08 G 18/67
C 08 G 18/79, C 08 L 67/02
///(C08L67/02, 51:06)

(30) Priorität: 22.03.85 DE 3510409

(43) Veröffentlichungstag der Anmeldung:
15.10.86 Patentblatt 86/42

(84) Benannte Vertragsstaaten:
DE FR GB IT

(71) Anmelder: HÜLS AKTIENGESELLSCHAFT
Patentabteilung / PB 15 - Postfach 13 20
D-4370 Marl 1(DE)

(72) Erfinder: Dröscher, Michael, Dr.
Hetkerbruch 34
D-4270 Dorsten 11(DE)

(72) Erfinder: Gerth, Christian, Dr.
Brukterer Strasse 8
D-4358 Haltern(DE)

(72) Erfinder: Bornschlegl, Eduard, Dr.
Inselweg 22
D-4358 Haltern(DE)

(54) Kälteschlagzähe, thermoplastisch verarbeitbare Formmasse aus Poly(alkylenterephthalat).

(57) Kälteschlagzähe, thermoplastisch verarbeitbare Formmasse aus

A. 60 bis 99 Gew.-Teilen Poly(alkylenterephthalat),

B. 40 bis 1 Gew.-Teilen eines funktionelle Gruppen enthaltenden Poly(α-olefin)-Kautschuks enthalltend
   a. 50 bis 85 Gew.-Teile Ethen
   b. 15 bis 50 Gew.-Teile Propen und/oder Buten-(1)
   und
   c. ggf. ein oder mehrere Multiene
und

C. 0,1 bis 2,5 Gew.-Teilen – bezogen auf 100 Gew.-Teile der Formmasse – eines cyclischen, trimerisierten Isophorondiisocyanats oder eines Oligomeren davon mit einem Oligomerisierungsgrad von 2 bis 5 mit einer Isocyanatfunktionalität von 3 bis 7.

EP 0 197 260 A1

## Kälteschlagzähe, thermoplastisch verarbeitbare Formmasse aus Poly(alkylenterephthalat)

Gegenstand der Erfindung ist eine kälteschlagzähe, thermoplastisch verarbeitbare Formmasse aus Poly(alkylenterephtalat).

Es ist bekannt, schlagzähe, thermoplastisch verarbeitbare Formmassen, durch Schmelzemischen von Poly(alkylenterephthalaten) mit funktionelle Gruppen enthaltenden Poly-($\alpha$-olefin)-Kautschuktypen herzustellen (DE-OSS 26 22 876, 33 06 008).

Für viele Anwendungen reicht es aber nicht aus, beide Komponenten mechanisch zu vermischen. Es muß vielmehr eine energie- und zeitaufwendige thermische Nachbehandlung der Mischung im festen Zustand erfolgen. Dies wird z. B. in der DE-OS 33 06 008 beschrieben. Zudem führt die thermische Nachbehandlung bei eingefärbten Produkten zur Verschlechterung der Farbqualität.

EP-PS 56 293 beschreibt ein Verfahren, Poly(ethylenterephthalat) oder Polymermischungen auf Basis von Poly(ethylenterephthalat) mit aromatischen Diisocyanaten vorzumischen und in einem Zweischneckenextruder mit Entgasungszone, die auf eine Temperatur zwischen 280 °C und 320 °C geheizt wird, zu verarbeiten. Allerdings neigen Formmassen, die nach der Lehre der EP-PS 56 293 mit aromatischen Diisocyanaten hergestellt werden, zur Verfärbung. Aliphatische oder cycloaliphatische Diisocyanate, die keine Verfärbung verursachen, sind, verglichen mit den aromatischen Diisocyanaten, bedeutend weniger reaktiv und deutlich toxischer.

Aufgabe der Erfindung war es, Formmassen auf Basis von Poly(alkylenterephthalaten) und funktionelle Gruppen enthaltende Poly($\alpha$-olefin)-Kautschuktypen zu finden, die bereits ohne thermische Nachbehandlung im festen Zustand ein hohes Werteniveau erreichen.

Die Aufgabe der Erfindung wurde durch eine Formmasse bestehend aus

A. 60 bis 99 Gew.-Teilen Poly(alkylenterephthalat) mit einer Viskositätszahl (J) von mindestens 50 cm³/g,

B. 40 bis 1 Gew.-Teilen eines funktionelle Gruppen enthaltenden Poly($\alpha$-olefin)- Kautschuks mit 0 bis 15 Doppelbindungen/1000 C-Atome und einer Mooney-Viskosität ($ML_{1+4}$; 100 °C; DIN 53 523) von 30 bis 130 enthaltend

   a. 50 bis 85 Gew.-Teile Ethen

   b. 15 bis 50 Gew.-Teile Propen und/oder Buten-(1) und

   c. ggf. ein oder mehrere Multiene mit isolierten Doppelbindungen, wobei die Komponenten a., b. und c. sich zu 100 Gew.-Teilen aufaddieren sollen,

und

C. 0,1 bis 2,5 Gew.-Teilen - bezogen auf 100 Gew.-Teile der Formmasse - eines cyclischen, trimerisierten Isophorondiisocyanats oder eines Oligomeren davon mit einem Oligomerisierungsgrad von 2 bis 5 mit einer Isocyanatfunktionalität von 3 bis 7 gelöst.

Als Poly(alkylenterephthalate) werden neben Poly(propylenterephthalat) bevorzugt Poly(ethylenterephthalat) und Poly(butylenterephthalat) eingesetzt.

Bis zu 30 Mol-%, vorzugsweise 5 bis 20 Mol-%, der Terephthalsäure im Poly(alkylenterephthalat) können durch aromatische, cycloaliphatische oder aliphatische Dicarbonsäuren ersetzt werden. Beispiele geeigneter Di-

0197260
O.Z. 4059

carbonsäuren sind Isophthalsäure, Phthalsäure, Cyclo-hexan-1.4-dicarbonsäure, Adipinsäure, Sebazinsäure, Azelainsäure, Decandicarbonsäure o. ä.

Bis zu 30 Mol-%, vorzugsweise 5 bis 20 Mol-%, des Diols können durch aliphatische oder cycloaliphatische Diole, wie beispielsweise Ethylenglykol, Propandiol-(1.3), Butandiol-(1.4), Hexandiol-(1.6), Neopentylglykol, 1.4-Dimethylolcyclohexan, Dodecandiol-(1.12) o. ä. ersetzt sein.

Das erfindungsgemäß verwendete Poly(alkylenterephthalat) wird in üblicher Weise durch Um- oder Veresterung und anschließende Polykondensation von Terephthalsäure oder deren polyesterbildenden Derivaten sowie dem entsprechenden Diol in Gegenwart von Katalysatoren hergestellt (Sorensen und Campbell, Preparative Methods of Polymer Chemistry, Interscience Publishers Inc., N.Y., 1961, Seiten 111 bis 127; Kunststoff-Handbuch, Band VIII, C. Hanser Verlag München, 1973, bzw. Journal of Polymer Science, Part A 1, 4, Seiten 1851 bis 1859, 1966).

Neben Homo- und Copolyestern können auch Polyesterge-mische eingesetzt werden, wobei die Mischungsverhältnisse für die Erfindung unkritisch sind.

Für die Herstellung der Formmassen geeignete Poly(alkylen-terephthalate) (Komponente A.) weisen eine Viskositätszahl J von mindestens 50 cm$^3$/g auf. Im Falle von Poly-(ethylenterephthalat) als Ausgangsmaterial werden vorzugsweise Polyester mit einer Viskositätszahl J von 55 bis 75 cm$^3$/g eingesetzt. Bei den anderen Polyestertypen werden vorzugsweise Produkte mit einer Viskositäts-zahl J von 80 bis 160 cm$^3$/g als Ausgangsprodukte gewählt.

0197260
O.Z. 4059

Unter den Begriff Poly(alkylenterephthalat) werden auch Blockcopolyester gerechnet. Derartige Produkte werden z. B. in Chimia 28 (9), Seiten 544 bis 552 (1974) und in Rubber Chemistry and Technology 50, Seiten 688 bis 703 (1977), beschrieben. Diese Blockcopolyester enthalten neben den o. g. aromatischen Dicarbonsäuren und Diolen ein Poly(oxyalkylen)diol mit einem Molgewicht im Bereich von etwa 600 bis 2500. Bevorzugte Poly(oxyalkylen)diole sind Poly(oxyethylen)diol, Poly(oxypropylen)diol und Poly-(oxytetramethylen)diol. Der Anteil der Poly(oxyalkylen)-diole liegt im Bereich von 4 bis 40 Gew.-%, vorzugsweise von 10 bis 35 Gew.-% (bezogen auf den genannten Blockcopolyester).

Die für die Komponente B. eingesetzten Poly($\alpha$-olefin)-Kautschuke können als amorpher Typ, Sequenz-Typ oder als Mischung aus beiden Typen vorliegen. Diese Produkte sind handelsüblich.

Die Kautschuke werden im allgemeinen als Pulver, Krümel oder Granulat eingesetzt und können < 5 Masse-% - bezogen auf den Kautschuk - eines Trennpulvers, wie beispielsweise Polyethylen, Talkum oder Aerosil, enthalten. Die Poly-($\alpha$-olefin)-Kautschuktypen werden durch Polymerisation von

a. 50 bis 85 Gew.-Teilen, vorzugsweise von 60 bis 80 Gew.-Teilen, Ethen,

b. 15 bis 50 Gew.-Teilen, vorzugsweise von 20 bis 40 Gew.-Teilen Propen und/oder Buten-(1) erhalten. Daneben können bei der Polymerisation ggf. noch

c. ein oder mehrere Multiene mit isolierten Doppelbindungen

eingesetzt werden. Der Anteil an diesen Multienen im Kautschuk beträgt 0,5 bis 10 Gew.-Teile, vorzugsweise 1 bis 5 Gew.-Teile. (Die Komponenten a., b. und c. sollen sich zu 100 Gew.-Teilen aufaddieren). Entsprechend dem Anteil an Multien-Komponente weist der Kautschuk

- 5 -                                    0197260

bis zu 15 Doppelbindungen/1000 C-Atome auf.

Die Mooney-Viskosität ($ML_{1+4}$; 100 °C; DIN 53 523) des
Poly($\alpha$-olefin)-Kautschuks beträgt 30 bis 130, vorzugsweise 35 bis 110. Die Funktionalisierung des Poly($\alpha$-ole-
fin)-Kautschuks erfolgt in bekannter Weise, gegebenenfalls in Gegenwart von radikalbildenden Substanzen,
z. B. mit ungesättigten Carbonsäuren oder Dicarbonsäuren
oder ihren Derivaten oder mit ungesättigten Hydroxyl-,
Epoxid- oder Isocyanatverbindungen. Es können auch
Mischungen von zwei oder mehr Funktionalisierungskomponenten eingesetzt werden (DE-OS 24 01 149).

In einer bevorzugten Ausführungsform wird zur Funktionalisierung an den Kautschuk ein Gemisch von Maleinsäureanhydrid und Maleinsäure- und/oder Fumarsäure-di-($C_1$
bis $C_{20}$-alkyl)-ester addiert. Insbesondere verwendet
werden Diester der Fumarsäure. Als Alkoholkomponente
werden bevorzugt n-Butanol, n-Heptanol und n-Pentanol
eingesetzt. Das Masseverhältnis von Maleinsäureanhydrid
zu Diester beträgt 1 : 5 bis 1 : 0,5, vorzugsweise
1 : 2 bis 1 : 0,5.

In dem funktionelle Gruppen enthaltenden Kautschuk
(Komponente B.) beläuft sich der Anteil an Poly($\alpha$-olefin)-
Kautschuk auf 92,5 bis 99,5 Masse-%, vorzugsweise auf
94 bis 99 Masse-%.

Das cyclische, trimerisierte Isophorondiisocyanat sowie
seine Oligomeren mit einem Oligomerisierungsgrad von
2 bis 5 und auch die Herstellung davon sind aus DE-PS
23 25 826 bekannt. Bevorzugt eingesetzt wird das cyclische,
trimerisierte Isophorondiisocyanat. Grundsätzlich können
auch Gemische der genannten Verbindungen als Komponente
C. eingesetzt werden.

0197260
O.Z. 4059

Die Produkte werden in Mengen von 0,1 bis 2,5 Gew.-Teilen, vorzugsweise von 0,5 bis 1,5 Gew.-Teilen, bezogen auf 100 Gew.-Teile der Formmasse, eingesetzt.

Zur Herstellung der erfindungsgemäßen Formmassen wird zuerst bei Raumtemperatur eine Mischung aus den Komponenten A., B. und C. hergestellt. Für die thermische Behandlung in der Schmelze wird üblicherweise ein (dis)-kontinuierlich betriebener Kneter eingesetzt. Im allgemeinen beträgt die Behandlungszeit bei kontinuierlicher Arbeitsweise 1 bis 5 min und bei diskontinuierlicher Arbeitsweise 2 bis 20 min, wobei die Temperatur 240 °C bis 300 °C, bevorzugt 250 °C bis 270 °C, beträgt. Für Poly-(ethylenterephthalate) liegt der bevorzugte Temperaturbereich bei 260 °C bis 280 °C.

Bei der Herstellung ist es vorteilhaft, zuerst die Komponenten A. und B. zu mischen, bevor die Komponente C. dazugefügt wird, oder B. vorzulegen und A. zusammen mit C. zuzugeben.

In die erfindungsgemäßen Formmassen können andere in der Polyestertechnologie übliche Polymere, wie z. B. Polyamide (Faserforsch. Textiltechn. 27 (2), 81 - 86 (1976)), Polyetheresteramide (DE-OS 29 30 343), Polyetherester (US-PS 4 317 764) eingearbeitet werden. Diese angeführten Mischungsbestandteile sind in den so erhaltenen Mischungen zu 1 bis 40, vorzugsweise 5 bis 25 Gew.-Teilen, enthalten.

Übliche Zusatz- und Hilfsstoffe, wie Pigmente, Verarbeitungsmittel, Füll- und Verstärkungsstoffe, Hydrolyse-, Thermo- oder UV-Stabilisatoren, können während der Herstellung als auch in die fertigen, behandelten Formmassen eingearbeitet werden.

Gegenüber entsprechenden Produkten des Standes der Technik weisen die erfindungsgemäßen Formmassen eine Reihe von Vorteilen auf: Es wird ein hohes Kerbschlagniveau in der Kälte erreicht, ohne daß eine energie- und zeitaufwendige thermische Nachbehandlung notwendig ist. Zudem haben die erfindungsgemäßen Formmassen ein gutes Fließvermögen. Außerdem neigen aliphatische Diisocyanate nicht zum Verfärben und sind weniger toxisch als aromatische.

Die in der Beschreibung und den Beispielen angeführten Parameter wurden mittels der nachstehend genannten Meßmethoden bestimmt:

Die <u>Kerbschlagzähigkeit ($a_K$)</u> der Formmassen wurde nach DIN 53 453 an Normkleinstäben mit Rechteckkerbe gemessen.

Die <u>Mooney-Viskosität</u> der Copolyolefine wurde gemäß DIN 53 523, Teil 1 bis 3 (unter den Bedingungen $ML_{1+4}$; 100 °C), bestimmt.

Die <u>Viskositätszahl (J)</u> wurde nach DIN 16 779, Teil 2, an Lösungen von 0,5 g Poly(alkylenterephthalat) in 100 ml Phenol/o-Dichlorbenzol (50/50 Gew.-Teile) bei 25 °C bestimmt.

Mit Buchstaben gekennzeichnete Versuche sind nicht erfindungsgemäß.

<u>Beispiele</u>

<u>Herstellung des funktionalisierten Poly($\alpha$-olefin)-Kautschuks (Komponente B)</u>

95 Gew.-Teile eines Poly($\alpha$-olefin-Kautschuks (75 Masse-% Ethylen, 23 Masse-% Propylen, 2 Masse-% Ethylidennorbornen) mit einer Mooney-Viskosität von 85 werden in die Einzugszone eines Zweischneckenextruders eindosiert. In einer weiteren Einzugszone wird eine in einem Behälter hergestellte Mischung aus 2,5 Gew.-Teilen Maleinsäureanhydrid und 2,5 Gew.-Teilen Fumarsäure-di-n-butylester
dem geschmolzenen Kautschuk zugegeben. Die Heizzonen
des Extruders sind dabei, mit Ausnahme der ersten, gekühlten, auf 300 °C eingestellt. Es wird granuliert und
auf eine Restfeuchte von weniger als 1 % getrocknet.

Herstellung der Formmasse aus den Komponenten A. und B.

Das Granulat der Komponente B. mischt man mit Poly(butylenterephthalat) (J = 110 cm³/g) im Verhältnis 20 zu 80
Gew.-Teile ab und schmilzt das Gemenge in einem Doppelschneckenextruder, dessen Dispergierwirkung durch Knetblöcke verstärkt wurde, auf. Es wird granuliert und auf
eine Restfeuchte von weniger als 0,5 % getrocknet.

Versuch 1

Die Formmasse aus 20 Gew.-Teilen der Komponente B. und
80 Gew.-Teilen Poly(butylenterephthalat) (J = 110 cm³/g)
wird zusammen mit oligomerem Isophorondiisocyanat der
Funktionalität 3,2 im Verhältnis 99 zu 1 Gew.-Teile in
einem Doppelschneckenkneter, dessen Dispergierwirkung
durch Knetblöcke verstärkt wurde, aufgeschmolzen. Es wird
granuliert und auf eine Restfeuchte von < 0,5 % getrocknet.

Die Formmasse wird zu Normkleinstäben verspritzt und
der Kerbschlagprüfung unterzogen. Die Ergebnisse sind in
der Tabelle angegeben.

Versuch 2

Die Komponente B. wird in einem Doppelschneckenkneter,
dessen Dispergierwirkung durch Knetblöcke verstärkt wurde,
aufgeschmolzen, und im 5. Raster des Extruders werden

O.Z. 4059

Poly(butylenterephthalat) (J = 110 cm³/g) und oligomeres Isophorondiisocyanat der Funktionalität 3,2 im Gewichtsverhältnis 80 zu 1, bezogen auf 20 Gew.-Teile der Komponente B, zugegeben. Die Formmasse wird granuliert, auf eine Restfeuchte < 0,5 % getrocknet und, wie in Versuch 1 beschrieben, geprüft.

Versuch A

Die oben beschriebene Formmasse aus den Komponenten A. und B. wird 24 h bei 200 °C unter Vakuum (0,5 mbar) in einem Laborrotationsverdampfer thermisch nachbehandelt. Die Prüfung der Formmasse erfolgt wie in Versuch 1 beschrieben

Tabelle

| Versuch | $J^{+)}$ $[cm^3/g]$ | $a_K$ $[kJ/m^2]$ | | |
|---|---|---|---|---|
| | | RT | -20 °C | -40 °C |
| 1 | 152 | angebrochen | 13 | 10 |
| 2 | 132 | kein Bruch | 13 | 10 |
| A | 125 | 38 | 12 | 9 |

[+)] auf Polyesteranteil bezogen

- 1 -

0197260

Patentansprüche:

1. Kälteschlagzähe, thermoplastisch verarbeitbare Formmasse aus

A. 60 bis 99 Gew.-Teilen Poly(alkylenterephthalat) mit einer Viskositätszahl (J) von mindestens 50 cm³/g,

B. 40 bis 1 Gew.-Teilen eines funktionelle Gruppen enthaltenden Poly($\alpha$-olefin)-Kautschuks mit 0 bis 15 Doppelbindungen/1000 C-Atome und einer Mooney-Viskosität (ML$_{1+4}$; 100 $^{o}$C; DIN 53 523) von 30 bis 130 enthaltend

    a. 50 bis 85 Gew.-Teile Ethen

    b. 15 bis 50 Gew.-Teile Propen und/oder Buten-(1) und

    c. ggf. ein oder mehrere Multiene mit isolierten Doppelbindungen, wobei die Komponenten a., b. und c. sich zu 100 Gew.-Teilen aufaddieren sollen,

und

C. 0,1 bis 2,5 Gew.-Teilen - bezogen auf 100 Gew.-Teile der Formmasse - eines cyclischen, trimerisierten Isophorondiisocyanats oder eines Oligomeren davon mit einem Oligomerisierungsgrad von 2 bis 5 mit einer Isocyanatfunktionalität von 3 bis 7.

2. Formmasse gemäß Anspruch 1, dadurch gekennzeichnet, daß als Komponente C. das cyclische, trimerisierte Isophorondiisocyanat eingesetzt wird.

3. Formmasse gemäß Anspruch 1 und 2, dadurch gekennzeichnet, daß die Formmasse 0,5 bis 1,5 Gew.-Teile der Komponente C. - bezogen auf 100 Gew.-Teile der Formmasse - enthält.

Europäisches
Patentamt

**EUROPÄISCHER RECHERCHENBERICHT**

**0197260**
Nummer der Anmeldung

EP   86 10 1636

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-1 814 073   (ICI)<br>*   Ansprüche   1,6;   Seite   10, letzter Absatz - Seite 11, Absatz 1;  Seite  14,  letzter  Absatz - Seite 17, Absatz 1 *<br><br>--- | 1 | C 08 G   18/40<br>C 08 G   18/62<br>C 08 G   18/67<br>C 08 G   18/79<br>C 08 L   67/02  //<br>(C 08 L   67/02<br>C 08 L   51:06  ) |
| D,A | EP-A-0 056 293   (DU PONT)<br>* Ansprüche 1,4 *<br><br>--- | 1 | |
| A | FR-A-2 167 819   (BAYER)<br>* Anspruch 1; Seite 3, Zeile 16 - Seite 4, Zeile 4 *<br><br>----- | 1 | |
| | | | **RECHERCHIERTE SACHGEBIETE (Int. Cl.4)**<br><br>C 08 G<br>C 08 L |

Der vorliegende Recherchenbericht wurde für alle Patentansprüche erstellt.

| Recherchenort<br>DEN HAAG | Abschlußdatum der Recherche<br>30-07-1986 | Prüfer<br>VAN PUYMBROECK M.A. |
|---|---|---|